# FASCICULE DE BREVET EUROPEEN

(11) **EP 3 216 630 B1**
(45) Date de publication et mention de la délivrance du brevet: **05.05.2021**
(21) Numéro de dépôt: 17159662.0
(22) Date de dépôt: 07.03.2017
(51) Int. Cl.: B60F 1/04, B61C 9/14, B61D 15/00, B60T 13/38, B60T 17/22

(54) **ESSIEU MOTEUR POUR VEHICULE FERROVIAIRE ET VEHICULE FERROVIAIRE MUNI D'UN TEL ESSIEU**
ANTRIEBSACHSE FÜR SCHIENENFAHRZEUG, UND SCHIENENFAHRZEUG, DAS MIT EINER SOLCHEN ACHSE AUSGESTATTET IST
MOTORISED AXLE FOR RAILWAY VEHICLE AND RAILWAY VEHICLE PROVIDED WITH SUCH AN AXLE

(30) Priorité: 07.03.2016 FR 1651890
(43) Date de publication de la demande: 13.09.2017
(73) Titulaire: UNAC, 30310 Vergeze (FR)
(72) Inventeur: ROUDAUT, Gildas, 30000 NIMES (FR); FERREIRA, Tony, 30920 CODOGNAN (FR); CALAMIA, Julien, 30670 AIGUES-VIVES (FR)
(74) Mandataire: IPAZ

(56) Documents cités:
- EP-A1- 1 746 006
- BE-A1- 833 061
- US-A- 4 018 140
- US-A- 4 356 773
- US-A1- 2015 090 064
- US-B2- 7 201 106

## Description

La présente invention concerne un essieu moteur hydraulique pour un véhicule ferroviaire, par exemple de type pelle ferroviaire. Elle concerne également, un véhicule ferroviaire muni d'un tel essieu moteur.

Un tel essieu est par exemple connu du document EP 1 746 006 A1.

Le domaine de l'invention est le domaine des véhicules ferroviaires, en particulier des véhicules rail-route, et encore plus particulièrement des véhicules industriels ferroviaires ou rail-route, de type pelle ferroviaire, débroussailleur ferroviaire, etc.

### Etat de la technique

On connait des véhicules industriels ferroviaires, ou des véhicules industriels rail-route, conçus pour circuler sur une voie ferrée en vue par exemple d'accomplir divers travaux de voieries, sur, ou en périphérie, de la voie ferrée, par exemple pour débroussailler avec un débroussailleur ou intervenir en profondeur avec pelleteuse.

Ces véhicules comprennent au moins un essieu moteur, par exemple hydraulique, permettant au véhicule de se déplacer sur la voie ferrée. Les véhicules rail-route comprennent en outre au moins un deuxième essieu moteur leur permettant, en plus, de se déplacer sur route.

L'essieu moteur utilisé pour mouvoir le véhicule sur une voie ferrée est un organe essentiel. L'essieu moteur comprend généralement un moteur hydraulique, un arbre de transmission. Le véhicule comprend en outre un bloc frein, réalisant un frein de parc, qui peut également servir pour un freinage d'urgence du véhicule ferroviaire.

Sur certains véhicules, le frein de parc est agencé au niveau de l'essieu moteur. Cependant, les essieux moteurs équipés d'un frein de parc présentent un encombrement important. Cet encombrement implique d'une part des inconvénients sur la conception du véhicule qui doit tenir compte de cet encombrement. D'autre part, l'encombrement important présenté par l'essieu moteur équipé du frein de parc, rend difficile, voire impossible, l'utilisation d'un véhicule équipé de cet essieu sur certaines voies ferrées.

Un but de la présente invention est de remédier à ces inconvénients.

Un autre but de l'invention est de proposer un essieu moteur pour véhicule ferroviaire, ou véhicule rail-route, équipé d'un frein de parc moins encombrant.

Encore un autre but de l'invention est de proposer un essieu moteur pour véhicule ferroviaire, ou véhicule rail-route, équipé d'un frein de parc moins encombrant et ne modifiant pas, ou peu, l'architecture dudit véhicule.

Il est aussi un but de l'invention de proposer un essieu moteur pour véhicule ferroviaire, ou véhicule rail-route, équipé d'un frein de parc qui ne vient pas dégrader la possibilité d'utilisation dudit véhicule sur certaines voies ferrées.

### Exposé de l'invention

L'invention permet d'atteindre au moins l'un de ces buts par un essieu pour véhicule ferroviaire, tel qu'une pelle ferroviaire, ledit essieu comprenant :
- au moins deux paliers,
- un moteur hydraulique disposé entre lesdits paliers,
- un arbre de transmission traversant ledit essieu et débouchant sur chacune des deux extrémités dudit essieu, et
- un bloc frein de parc, ou d'urgence ;
caractérisé en ce que ledit bloc frein est disposé entre lesdits deux paliers.

Ainsi, dans l'essieu moteur selon l'invention, le bloc frein de parc vient s'intercaler entre deux paliers dans la direction défini par l'arbre de transmission. Par conséquent, l'essieu selon l'invention est muni d'un bloc frein de parc tout en étant peu encombrant dans la direction radiale de l'essieu.

De plus, comme le bloc frein de parc s'insère dans l'essieu moteur dans la direction de l'arbre de transmission, il ne vient pas modifier l'architecture dudit véhicule. Par exemple, avec l'essieu moteur selon l'invention, il n'est pas nécessaire de modifier l'architecture du véhicule pour dégager un espace dans lequel le bloc frein de parc doit être intégré.

En outre, dans l'architecture proposée par l'invention, il est possible de concevoir un essieu moteur dans lequel le bloc frein de parc ne dépasse pas le moteur hydraulique dans la direction radiale dudit essieu. Dans ce cas, l'essieu moteur selon l'invention n'a aucune influence sur l'utilisation d'un véhicule ferroviaire équipé d'un tel essieu sur telle ou telle voie ferrée.

Avantageusement, le bloc frein peut présenter un axe confondu avec l'axe de l'arbre de transmission.

Ainsi, l'architecture de l'essieu selon l'invention est simplifiée.

Le moteur hydraulique peut être muni d'une came et d'un barillet à piston du côté de l'une de ses extrémités.

Dans ce cas, suivant un mode de réalisation particulièrement avantageux, le bloc frein de parc peut être positionné dans ledit essieu du côté de l'extrémité opposée dudit moteur hydraulique.

Ainsi, la conception et le positionnement du bloc frein dans l'essieu selon l'invention sont facilités, et l'encombrement du bloc frein est diminué.

Le bloc frein de parc peut avantageusement être disposé entre le moteur hydraulique et l'un des paliers. Ainsi, le bloc frein peut être positionné au niveau d'une zone centrale de l'essieu moteur selon l'invention, ce qui permet d'obtenir un frein de parc plus équilibré et plus efficace.

Suivant une version avantageuse, mais nullement limitative, l'essieu selon l'invention peut comprendre une bride de frein, disposée entre le bloc frein de parc et le moteur hydraulique, et dans laquelle sont noyées les vis d'un carter de distribution dudit moteur hydraulique.

Une telle bride de frein permet de faciliter l'intégration du bloc frein dans l'essieu sans influencer le fonctionnement du moteur hydraulique, et sans modifier le fonctionnement du moteur hydraulique.

Ainsi, quel que soit le moteur hydraulique utilisé, un même bloc frein peut être utilisé, en adaptant uniquement la bride de frein.

Le bloc frein de parc peut comprendre un ou plusieurs disques de frein solidaire(s) de l'arbre de transmission.

Le ou les disques de frein peuvent être disposés entre au moins deux entretoises de calage entre lesquels le(s)dit(s) disques de freins sont pris en sandwichs.

Le bloc frein peut en outre comprendre un piston. Ce dernier peut être libre en translation dans la direction de l'arbre de transmission, de sorte que dans une position, ledit piston vient compresser les disques de frein, directement ou par l'intermédiaire des entretoises de calage, ou encore d'autre(s) pièce(s), pour réaliser un freinage de parc ou un freinage d'urgence.

En outre, le bloc frein de parc peut comprendre un ou plusieurs ressorts de poussée. Ces ressorts de poussée ont pour fonction de fournir la force de compression des disques de frein pour réaliser un freinage de parc ou un freinage d'urgence.

Lorsque le bloc frein de parc comprend un piston, tel que décrit plus haut, les ressorts de poussée viennent pousser ledit piston en vue d'appliquer une force de compression sur les disques de frein et de réaliser un freinage.

Dans un exemple de réalisation préféré, nullement limitatif, l'arbre de transmission peut comporter deux pièces connectées entre-elles :
- une première pièce de transmission, montée sur roulement, dans un des paliers, et débouchant dudit essieu du côté de l'une des extrémités dudit essieu, et
- une deuxième pièce de transmission, montée sur roulement, dans l'autre des paliers, et débouchant du côté de l'autre des extrémités dudit essieu.

Un tel arbre de transmission en deux pièces, permet de faciliter la conception et l'assemblage de l'essieu moteur selon l'invention.

Dans ce cas, la première pièce et la deuxième pièce peuvent être reliées entre-elles dans le moteur hydraulique. Dans ce cas, l'une desdites pièces débouche dudit moteur hydraulique pour ensuite traverser le bloc frein de parc, puis l'un des paliers, et déboucher hors dudit pallier au niveau de l'une des extrémités de l'essieu selon l'invention.

Suivant un autre aspect de la présente invention, il est proposé un véhicule ferroviaire équipé d'un essieu moteur selon l'invention.

Un tel véhicule peut être un véhicule rail-route, pouvant circuler à la fois sur une voie ferrée et sur la route.

Suivant un exemple de réalisation non limitatif, un tel véhicule peut être une pelle.

### Description des figures et modes de réalisation

D'autres avantages et caractéristiques apparaîtront à l'examen de la description détaillée d'un mode de réalisation nullement limitatif, et des dessins annexés sur lesquels :
- la FIGURE 1 est une représentation schématique, en coupe, d'un exemple de réalisation non limitatif d'un essieu moteur selon l'invention ;
- la FIGURE 2 est une représentation schématique, en coupe, du bloc frein de parc de l'essieu de la FIGURE 1 ; et
- la FIGURE 3 est une représentation schématique, en coupe, du bloc frein de parc de l'essieu de la FIGURE 1, selon une vue isométrique.

Il est bien entendu que les modes de réalisation qui seront décrits dans la suite ne sont nullement limitatifs. On pourra notamment imaginer des variantes de l'invention ne comprenant qu'une sélection de caractéristiques décrites par la suite isolées des autres caractéristiques décrites, si cette sélection de caractéristiques est suffisante pour conférer un avantage technique ou pour différencier l'invention par rapport à de l'état de la technique antérieure. Cette sélection comprend au moins une caractéristique de préférence fonctionnelle sans détails structurels, ou avec seulement une partie des détails structurels si cette partie est uniquement suffisante pour conférer un avantage technique ou pour différencier l'invention par rapport à l'état de la technique antérieure.

Sur les figures, les éléments communs à plusieurs figures conservent la même référence.

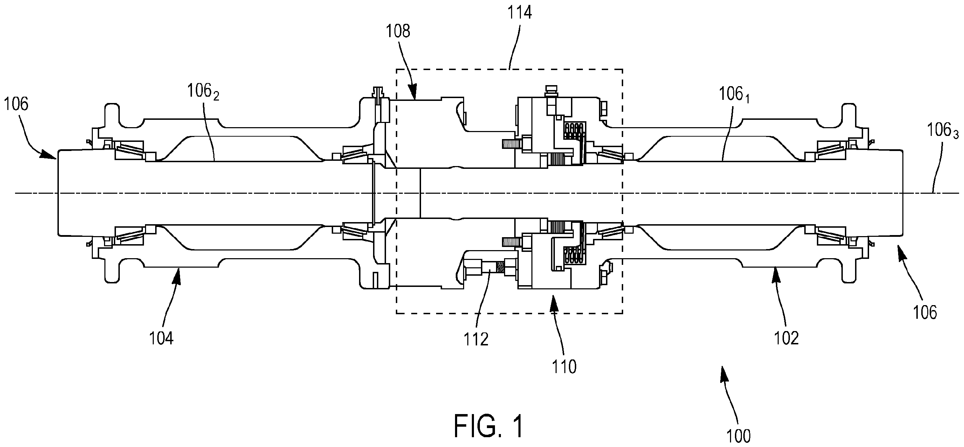

La FIGURE 1 est une représentation schématique, en coupe, d'un exemple de réalisation non limitatif d'un essieu moteur selon l'invention.

L'essieu 100 représenté sur la FIGURE 1 correspond par exemple à un essieu moteur d'une pelle rail-route.

L'essieu 100 comprend deux paliers 102 et 104. Chaque palier 102 et 104 est traversé par un arbre de transmission 106 réalisé en deux pièces 106₁ et 106₂. L'arbre de transmission 106 débouche sur chacune des extrémités de l'essieu 100.

Dans l'exemple représenté, le palier 102 se trouve à droite par rapport au sens d'avancement du véhicule et est traversé par la pièce 106₁, également appelé arbre droit, et le palier 104 se trouve à gauche par rapport au sens d'avancement du véhicule et est traversé par la pièce 106₂, également appelé arbre gauche.

L'essieu 100 comprend en outre un moteur hydraulique 108 disposé entre le palier droit 102 et le palier gauche 104. Le moteur hydraulique 108 est orienté de sorte que le barillet piston dudit moteur 108 se trouve du côté du palier gauche 104, et le carter de distribution se trouve du côté du palier droit 102. De plus, l'arbre droit 106₁ et l'arbre gauche 106₂ sont reliés ensemble dans le moteur hydraulique 108.

L'essieu 100 comprend en outre un bloc frein de parc, et/ou frein d'urgence, 110 agencé entre le moteur hydraulique 108 et le palier droit 102. Autrement dit, le bloc frein est disposé à droite du moteur hydraulique 108.

Le bloc frein 110 est traversé par l'arbre de transmission 106, et en particulier l'arbre droit 106₁ qui se prolonge depuis le moteur hydraulique 108, traverse le bloc frein 110, puis le palier droit 102, et débouche dudit palier droit.

Avantageusement, le bloc frein 110 présente un axe confondu avec l'axe 106₃ de l'arbre de transmission 106.

L'essieu 100 comprend en outre un tirant moteur 112 entre le moteur hydraulique 108 le palier droit 102.

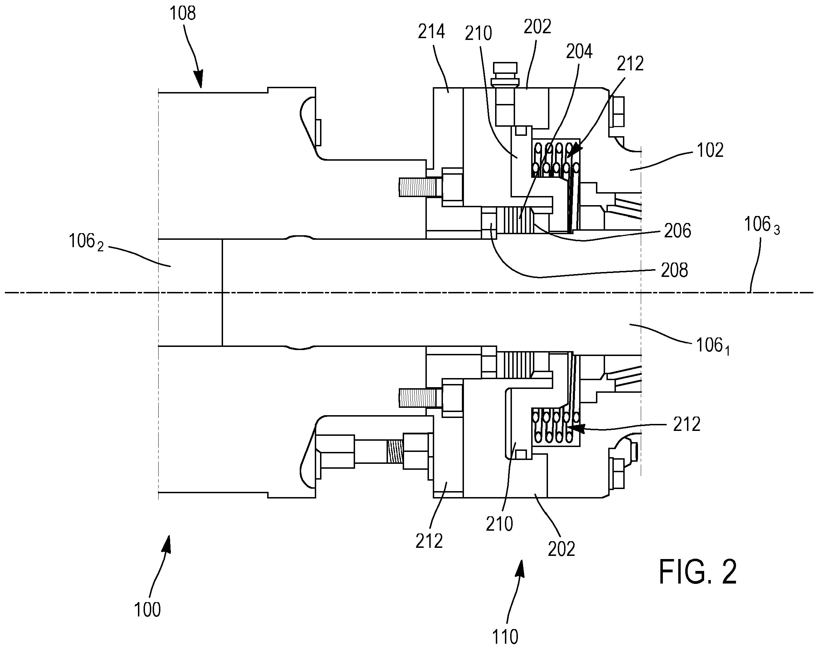

La FIGURE 2 est une représentation schématique détaillée de la zone référencée 114 de la FIGURE 1 comportant le bloc frein.

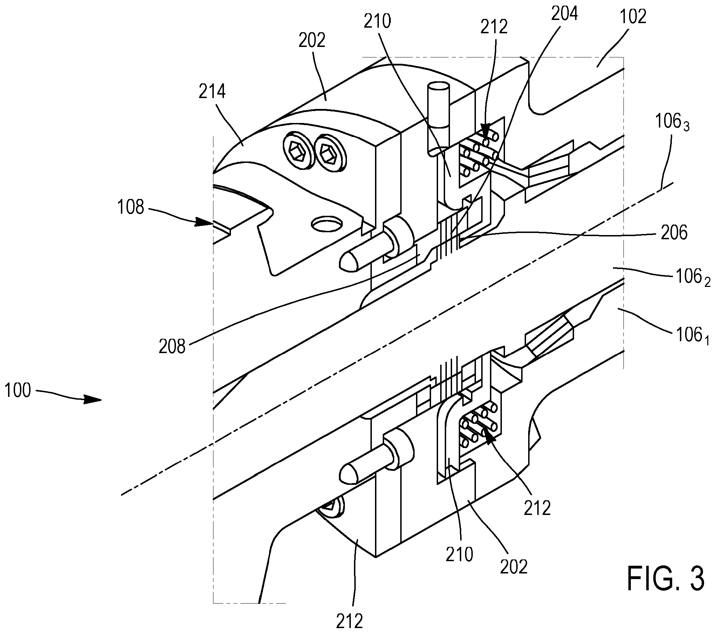

La FIGURE 3 est une représentation schématique de ladite zone, en coupe, selon une vue isométrique.

Le bloc frein 110 comprend un corps de frein 202, sensiblement circulaire, dont l'axe est confondu avec l'axe de l'essieu 106 et l'axe du moteur hydraulique 108.

Le bloc frein 110 comprend en outre plusieurs disques de frein 204 traversés par l'arbre droit 106₁ et disposés entre deux entretoises de calage 206 et 208, dans le corps de frein 202.

Le bloc frein 110 comprend en outre un piston de frein 210 libre en translation, suivant l'axe de l'essieu 106, dans le corps de frein 202.

Un ou plusieurs ressorts de poussée 212 sont en contact contre le palier droit 102 et viennent en poussée contre le piston de frein 210.

Tel que visible sur la FIGURE 2, du côté du moteur hydraulique 108, le bloc frein 110 est fermé par une bride de frein 214 disposée entre le bloc frein 110 et le moteur hydraulique 108, et dans lequel sont noyées les vis de fixation du carter de distribution du moteur hydraulique 108.

Bien entendu, l'invention n'est pas limitée aux exemples détaillés ci-dessus. Elle porte également sur un véhicule ferroviaire, ou de type rail-route, équipé d'un essieu moteur selon l'invention, tel qu'une pelle rail-route.

## Revendications

1. Essieu (100) pour véhicule ferroviaire, tel qu'une pelle ferroviaire, ledit essieu (100) comprenant :
- au moins deux paliers (102,104),
- un moteur hydraulique (108) disposé entre lesdits paliers (102,104),
- un arbre de transmission (106) traversant ledit essieu (100) et débouchant sur chacune des deux extrémités dudit essieu (100), et
- un bloc frein de parc (110), ou d'urgence ;
**caractérisé en ce que** ledit bloc frein de parc (110) est disposé entre lesdits deux paliers (102,104).

2. Essieu (100) selon la revendication précédente, **caractérisé en ce que** le bloc frein (110) présente un axe confondu avec l'axe (106₃) de l'arbre de transmission (106).

3. Essieu (100) selon l'une quelconque des revendications précédentes, **caractérisé en ce que** le moteur hydraulique (108) est muni d'une came et d'un barillet à piston du côté de l'une de ses extrémités, le bloc frein (110) étant positionné dans ledit essieu (100) du côté de l'extrémité opposée dudit moteur hydraulique (108).

4. Essieu (100) selon l'une quelconque des revendications précédentes, **caractérisé en ce que** le bloc frein de parc (110) est disposé entre le moteur hydraulique (108) et un des paliers (102,104).

5. Essieu (100) selon l'une quelconque des revendications précédentes, **caractérisé en ce qu'**il comprend une bride de frein (214), disposée entre le bloc frein de parc (110) et le moteur hydraulique (108), et dans laquelle sont noyées des vis d'un carter de distribution dudit moteur hydraulique (108).

6. Essieu (100) selon l'une quelconque des revendications précédentes, **caractérisé en ce que** le bloc frein de parc (110) comprend au moins un disque de frein (204), solidaire de l'arbre de transmission (106), disposé entre au moins deux entretoises de calage (206,208).

7. Essieu (100) selon l'une quelconque des revendications précédentes, **caractérisé en ce que** le bloc frein de parc (110) comprend un piston (210).

8. Essieu (100) selon l'une quelconque des revendications précédentes, **caractérisé en ce que** le bloc frein de parc (110) comprend un ou plusieurs ressorts de poussée (212).

9. Essieu (100) selon l'une quelconque des revendications précédentes, **caractérisé en ce que** l'arbre de transmission (106) comporte deux pièces connectées entre-elles :
- une première pièce de transmission (106₁), montée sur roulement, dans un des paliers (102), et débouchant dudit essieu (100) du côté de l'une des extrémités dudit essieu (100), et
- une deuxième pièce de transmission (106₂), montée sur roulement, dans l'autre des paliers (104), et débouchant du côté de l'autre des extrémités dudit essieu (100).

10. Essieu (100) selon la revendication précédente, **caractérisé en ce que** la première pièce (106₁) et la deuxième pièce (106₂) sont reliées entre-elles dans le moteur hydraulique (108), l'une desdites pièces (106₁) débouchant dudit moteur hydraulique (108) pour ensuite traverser le bloc frein (110), puis l'un des paliers (102), et déboucher hors dudit pallier (102) au niveau de l'une des extrémités dudit essieu (100).

11. Véhicule ferroviaire équipé d'un essieu moteur (100) selon l'une quelconque des revendications précédentes.

12. Véhicule ferroviaire selon la revendication précédente, **caractérisé en ce qu'**il s'agit d'un véhicule rail-route, pouvant circuler à la fois sur une voie ferrée et sur route.

13. Véhicule ferroviaire selon la revendication précédente, **caractérisé en ce qu'**il s'agit d'une pelle.

## Patentansprüche

1. Achse (100) für ein Schienenfahrzeug, wie einen Schienenbagger, wobei die Achse (100) umfasst:
- wenigstens zwei Lager (102,104),
- einen Hydraulikmotor (108), der zwischen den Lagern (102, 104) angeordnet ist,
- eine Übertragungswelle (106), welche die Achse (100) durchgreift und an jedem der beiden Enden der Achse (100) ausmündet, und
- eine Feststell- (110) oder Notbremseinheit;
**dadurch gekennzeichnet, dass** die Feststellbremseinheit (110) zwischen den beiden Lagern (102, 104) angeordnet ist.

2. Achse (100) nach dem vorhergehenden Anspruch, **dadurch gekennzeichnet, dass** die Bremseinheit (110) eine Achse aufweist, die mit der Achse (106₃) der Übertragungswelle (106) zusammenfällt.

3. Achse (100) nach einem der vorhergehenden Ansprüche, **dadurch gekennzeichnet, dass** der Hydraulikmotor (108) auf der Seite eines seiner Enden mit einem Nocken und einem Kolbenzylinder versehen ist, wobei die Bremseinheit (110) in der Achse (100) auf der Seite des gegenüberliegenden Endes des Hydraulikmotors (108) angeordnet ist.

4. Achse (100) nach einem der vorhergehenden Ansprüche, **dadurch gekennzeichnet, dass** die Feststellbremseinheit (110) zwischen dem Hydraulikmotor (108) und einem der Lager (102, 104) angeordnet ist.

5. Achse (100) nach einem der vorhergehenden Ansprüche, **dadurch gekennzeichnet, dass** sie einen Bremsflansch (214) umfasst, der zwischen der Feststellbremseinheit (110) und dem Hydraulikmotor (108) angeordnet ist, und in den Schrauben eines Verteilergehäuses des Hydraulikmotors (108) eingelassen sind.

6. Achse (100) nach einem der vorhergehenden Ansprüche, **dadurch gekennzeichnet, dass** die Feststellbremseinheit (110) wenigstens eine Bremsscheibe (204) aufweist, die mit der Übertragungswelle (106) fest verbunden und zwischen wenigstens zwei Klemmstreben (206, 208) angeordnet ist.

7. Achse (100) nach einem der vorhergehenden Ansprüche, **dadurch gekennzeichnet, dass** die Feststellbremseinheit (110) einen Kolben (210) umfasst.

8. Achse (100) nach einem der vorhergehenden Ansprüche, **dadurch gekennzeichnet, dass** die Feststellbremseinheit (110) eine oder mehrere Druckfedern (212) umfasst.

9. Achse (100) nach einem der vorhergehenden Ansprüche, **dadurch gekennzeichnet, dass** die Übertragungswelle (106) zwei miteinander verbundene Teile umfasst:
- ein erstes Übertragungsteil (106₁), das in einem der Lager (102) auf Wälzlager angebracht ist und auf der Seite von einem der Enden der Achse (100) aus der Achse (100) ausmündet, und
- ein zweites Übertragungsteil (106₂), das in dem anderen der Lager (104) auf Wälzlager angebracht ist und auf der Seite des anderen der Enden aus der Achse (100) ausmündet.

10. Achse (100) nach dem vorhergehenden Anspruch, **dadurch gekennzeichnet, dass** das erste Teil (106₁) und das zweite Teil (106₂) in dem Hydraulikmotor (108) miteinander verbunden sind, wobei das eine der Teile (106₁) aus dem Hydraulikmotor (108) ausmündet, um dann die Bremseinheit (110), anschließend das eine der Lager (102) zu durchgreifen und im Bereich von einem der Enden der Achse (100) aus dem Lager (102) auszumünden.

11. Schienenfahrzeug, das mit einer Antriebsachse (100) nach einem der vorhergehenden Ansprüche ausgestattet ist.

12. Schienenfahrzeug nach dem vorstehenden Anspruch, **dadurch gekennzeichnet, dass** es sich um ein Schienen-Straßen-Fahrzeug handelt, das sowohl auf einem Schienenweg als auch auf der Straße fahren kann.

13. Schienenfahrzeug nach dem vorstehenden Anspruch, **dadurch gekennzeichnet, dass** es sich um einen Bagger handelt.

## Claims

1. An axle (100) for a railway vehicle, such as a rail excavator, said axle (100) comprising:
- at least two bearings (102,104),
- a hydraulic motor (108) arranged between said bearings (102,104),
- a drive shaft (106) passing through said axle (100) and leading to each of the two ends of said axle (100), and
- a parking, or emergency, brake unit (110);
**characterized in that** said parking brake unit (110) is arranged between said two bearings (102,104).

2. The axle (100) according to the preceding claim, **characterized in that** the brake unit (110) has an axis that is coincident with the axis (106₃) of the drive shaft (106).

3. The axle (100) according to any one of the preceding claims, **characterized in that** the hydraulic motor (108) is equipped with a cam and a piston-driven cylinder on the side of one of its ends, the brake unit (110) being positioned in said axle (100) on the side of the end opposite said hydraulic motor (108).

4. The axle (100) according to any one of the preceding claims, **characterized in that** the parking brake unit (110) is arranged between the hydraulic motor (108) and one of the bearings (102,104).

5. The axle (100) according to any one of the preceding claims, **characterized in that** it comprises a brake flange (214), arranged between the parking brake unit (110) and the hydraulic motor (108), and in which screws of a timing cover of said hydraulic motor (108) are countersunk.

6. The axle (100) according to any one of the preceding claims, **characterized in that** the parking brake unit (110) comprises at least one brake disc (204),integral with the drive shaft (106), arranged between at least two spacers (206,208).

7. The axle (100) according to any one of the preceding claims, **characterized in that** the parking brake unit (110) comprises a piston (210).

8. The axle (100) according to any one of the preceding claims, **characterized in that** the parking brake unit (110) comprises one or more thrust springs (212).

9. The axle (100) according to any one of the preceding claims, **characterized in that** the drive shaft (106) includes two parts connected to one another:
- a first drive part (106₁), mounted on rolling bearings, in one of the bearings (102), and emerging from said axle (100) on the side of one of the ends of said axle (100), and
- a second drive part (106₂), mounted on rolling bearings, in the other of the bearings (104), and emerging from the side of the other end of said axle (100).

10. The axle (100) according to the preceding claim, **characterized in that** the first part (106₁) and the second part (106₂) are connected to one another in the hydraulic motor (108), one of said parts (106₁) emerging from said hydraulic motor (108) in order then to pass through the brake unit (110), then one of the bearings (102) and to emerge outside said bearing (102) at the level of one of the ends of said axle (100).

11. A railway vehicle equipped with a drive axle (100) according to any one of the preceding claims.

12. The railway vehicle according to the preceding claim, **characterized in that** it is a road-rail vehicle, capable of travelling both on a railway track and on a road.

13. The railway vehicle according to the preceding claim, **characterized in that** it is an excavator.
